# EUROPÄISCHE PATENTSCHRIFT

(11) **EP 2 080 987 B1**
(45) Veröffentlichungstag und Bekanntmachung des Hinweises auf die Patenterteilung: **06.06.2012**
(21) Anmeldenummer: 08000955.8
(22) Anmeldetag: 18.01.2008
(51) Int. Cl.: G01D 3/08, G01D 5/245

(54) **Messsystem und Verfahren zur Überwachung eines Messsystems**
Measurement system and device for surveillance of a measuring system
Système de mesure et procédé de surveillance d'un système de mesure

(43) Veröffentlichungstag der Anmeldung: 22.07.2009
(73) Patentinhaber: SIEMENS AKTIENGESELLSCHAFT, 80333 München (DE)
(72) Erfinder: Finkler, Roland, Dr., 91058 Erlangen (DE)

(56) Entgegenhaltungen:
- EP-A- 0 431 195
- EP-A- 1 205 728
- JP-A- 63 300 911
- JP-A- 2007 292 691

## Beschreibung

Die Erfindung betrifft ein Messsystem, wobei das Messsystem einen Geber zur Ermittelung der Lage eines bewegbaren Elements aufweist, wobei das Messsystem einen Energiespeicher aufweist, der bei Ausfall einer externen elektrischen Versorgungsspannung des Gebers zumindest ein Teil des Gebers derart mit elektrischer Energie versorgt, dass ein gespeicherter Zählerstand des Gebers bei Ausfall der externen elektrischen Versorgungsspannung erhalten bleibt, wobei der Energiespeicher eine Hilfsversorgungsspannung erzeugt.

Weiterhin betrifft die Erfindung ein Verfahren zur Überwachung eines Messsystems, wobei das Messsystem einen Geber zur Ermittelung der Lage eines bewegbaren Elements aufweist, wobei das Messsystem einen Energiespeicher aufweist, der bei Ausfall einer externen elektrischen Versorgungsspannung des Gebers zumindest ein Teil des Gebers derart mit elektrischer Energie versorgt, dass ein gespeicherter Zählerstand des Gebers bei Ausfall der externen elektrischen Versorgungsspannung erhalten bleibt, wobei vom Energiespeicher eine Hilfsversorgungsspannung erzeugt wird.

Insbesondere auf dem technischen Gebiet der Automatisierungstechnik wird zur Ermittlung einer Lage eines bewegbaren Elements, wie z.B. einer Motorwelle eines Antriebs zum Antreiben einer Maschinenachse, Messsysteme, insbesondere inkrementellen Messsysteme eingesetzt. Mittels eines inkrementellen Messsystems bei der der Geber eine Referenzmarke aufweist, kann nach dem Überfahren der Referenzmarke die absolute Lage ermittelt werden, in dem nach dem Überfahren der Referenzmarke (Lage Null) die überfahrenen Inkremente lückenlos mittels eines Zählers mitgezählt werden. Der Zählerstand der überfahrenen Inkremente entspricht dabei einer Groblage, wobei im Weiteren durch Interpolation, wie z.B. in der DE 27 29 697 A1 beschrieben, eine Feinlage ermitteln wird. Groblage und Feinlage zusammen ergeben die Absolutlage.

Insbesondere bei Werkzeugmaschinen, Produktionsmaschinen und/oder bei Robotern werden solche Messsysteme üblicherweise von einer Steuer- und/oder Regeleinrichtung, die zur Steuerung und/oder Regelung von bewegbaren Elementen der Maschine dient, im Normalbetrieb mit elektrischer Energie versorgt. Wird die Steuer- und/oder Regeleinrichtung ausgeschaltet, dann ist es bei vielen derartigen Messsystemen so, dass der Zählerstand für die überfahrenen Inkremente verloren geht und/oder nach dem Ausschalten überfahrene Inkremente nicht mehr mitgezählt werden. Nach dem Wiedereinschalten der Steuer- und/oder Regeleinrichtung muss bei solchen Messsystemen zunächst erst wieder die Referenzmarke überfahren werden, um die Absolutlage bestimmen zu können.

Nach dem Stand der Technik kann dieses Problem jedoch gelöst werden, in dem man eine Batterie vorsieht, die das Messsystem auch nach dem Ausschalten der Steuer- und/oder Regeleinrichtung versorgt. Ein solches Messsystem ist z.B. in der EP 0 362 407 A1 beschrieben. Dabei werden z.B. nicht alle elektrischen Bestandteile des Gebers mit Energie versorgt, sondern es wird nur ein Teil des Gebers mit elektrischer Energie versorgt. Der Geber wird solchermaßen in einem energiesparenderen Modus als im Normalbetrieb betrieben. Eventuell wird z.B. nur ein einzelnes RAM zur Speicherung des Zählerstandes versorgt (dann können allerdings etwaige Bewegungen des bewegbaren Elements bei ausgeschalteter Steuer- und/oder Regeleinrichtung nicht erfasst werden). Eventuell wird auch z.B. eine sonst kontinuierlich betriebene Leuchtdiode eines optischen Gebers nur gepulst betrieben und die Interpolationselektronik gar nicht betrieben, so dass die Feinlage gar nicht mehr oder nicht mehr so gut erfasst wird, wie sonst üblich aber immer noch ausreichend um die überfahrenen Inkremente zu zählen. Weiterhin sind Geber z.B. aus der DE 35 86 937 T2 und der EP 0 158 781 A1 bekannt.

Nachteilig bei diesem Stand der Technik ist, dass bei ungenügender Energieversorgung bei Ausfall der Batterie, der Zählerstand der überfahrenen Elemente gelöscht oder verändert werden kann. Dies kann insbesondere bei einem zu langen Ausfall der externen Energieversorgung des Gebers, welche im Normalbetrieb die Energieversorgung des Gebers sicherstellt, auftreten. Nach einem Wiederzuschalten der Steuerungs- und/oder Regeleinrichtung und damit nach Wiederherstellung der externen elektrischen Versorgungsspannung für den Normalbetrieb des Gebers ist dann nicht mehr sichergestellt, dass die vom Geber ermittelte Lage noch tatsächlich mit der wirklichen Lage des bewegbaren Elements übereinstimmt, weil zwischenzeitlich die von der Batterie erzeugte Hilfsversorgungsspannung zu weit abgesunken ist um zumindest die wichtigen elektrischen Bauteile des Gebers ausreichend mit Energie zu versorgen.

Ferner ist aus der DE 20 2004 000 413 U1 ein Geber bekannt, bei dem ein nichtflüchtiger Speicher zur Speicherung des Zählerstandes verwendet wird, wobei als unabhängige Energiequelle ein elektromechanischer Schnappmechanismus dient. Hierbei ist unter anderem die relativ aufwändige Mechanik nachteilig.

Der Erfindung liegt die Aufgabe zugrunde eine, aufgrund eines Ausfalls der elektrischen Energieversorgung des Gebers herrührende, fehlerhaft ermittelte Lage zu erkennen.

Diese Aufgabe wird gelöst durch ein Messsystem wie definiert im unabhängigen Anspruch 1 und durch ein Verfahren wie definiert im unabhängigen Anspruch 9.

Vorteilhafte Ausbildungen der Erfindung ergeben sich aus den abhängigen Ansprüchen.

Vorteilhafte Ausbildungen des Verfahrens ergeben sich analog zur vorteilhaften Ausbildung des Messsystems und umgekehrt.

Die Überwachungseinheit ist Bestandteil einer ohnehin vorhandenen Steuer- und/oder Regeleinrichtung zur Steuerung und/oder Regelung des bewegbaren Elements. Dadurch wird zur Realisierung der Überwachungseinheit auf zusätzliche Hardware verzichtet.

Die Überwachungseinheit überwacht nach einem Ausfall der externen elektrischen Versorgungsspannung unmittelbar vor Wiederherstellung der externen elektrischen Versorgungsspannung die Hilfsversorgungsspannung und falls die Hilfsversorgungsspannung unter einem Grenzwert liegt, erkannt die Überwachungseinheit eine fehlerhaft ermittelte Lage. Durch diese Maßnahme wird sichergestellt, dass insbesondere weil die Überwachungseinheit integraler Bestandteil der Steuer- und/oder Regeleinrichtung ist und somit über keine von der Steuer- und/oder Regeleinrichtung unabhängige Energieversorgung verfügt, nach einem Ausschalten und anschließendem Wiedereinschalten der Steuer- und/oder Regeleinrichtung eine fehlerhaft ermittelte Lage erkannt werden kann.

Ferner erweist es sich als vorteilhaft, wenn die Messeinrichtung derart ausgebildet ist, dass die externe elektrische Versorgungsspannung und die Hilfsversorgungsspannung über dieselben Spannungsmessleitungen gemessen werden, da dann keine zusätzlichen Messleitungen zur Ermittlung der Hilfsversorgungsspannung benötigt werden.

Weiterhin erweist es sich als vorteilhaft, wenn die Messeinrichtung derart ausgebildet ist, dass die Hilfsversorgungsspannung auf eine Ausgangssignalleitung des Gebers eingekoppelt wird und die Hilfsversorgungsspannung von der Überwachungseinheit über die Ausgangssignalleitung ermittelt wird, da dann keine zusätzlichen Messleitungen zur Ermittlung der Hilfsversorgungsspannung benötigt werden.

Weiterhin erweist es sich als vorteilhaft, wenn die Hilfsversorgungsspannung auf eine Ausgangssignalleitung des Gebers über einen Widerstand eingekoppelt wird. Durch diese Maßnahme wird eine einfache Möglichkeit der Einkopplung der Hilfsversorgungsspannung auf eine Ausgangssignalleitung des Gebers realisiert.

Ferner erweist es sich als vorteilhaft, wenn nur bei Ausfall der externen elektrischen Versorgungsspannung die Hilfsversorgungsspannung auf eine Ausgangssignalleitung des Gebers eingekoppelt wird. Durch diese Maßnahme wird vermieden, dass im Normalbetrieb die Ausgangsleitungen durch Einkoppeln der elektrischen Versorgungsspannung gestört werden.

Weiterhin erweist es sich als vorteilhaft, wenn der Energiespeicher als Batterie oder als Kondensator oder als eine Kombination von Batterie und Kondensator ausgebildet ist. Eine Ausbildung des Energiespeichers als Batterie oder als Kondensator oder als eine Kombination von Batterie und Kondensator stellt eine übliche Ausbildung des Energiespeichers dar.

Weiterhin erweist es sich als vorteilhaft, wenn bei Ausfall der externen Versorgungsspannung des Gebers zumindest ein Teil des Gebers von dem Energiespeicher zusätzlich derart mit elektrischer Energie versorgt wird, dass überfahrene Inkremente gezählt werden, da dann auch im Falle einer Bewegung des bewegbaren Elements während eines Ausfalls der Versorgungsspannung der Zählerstand korrekt ist.

Das erfindungsgemäße Messsystem ist besonders bei Werkzeugmaschinen, Produktionsmaschinen und/oder Robotern vorteilhaft einsetzbar, wobei selbstverständlich das Messsystem auch auf anderen technischen Gebieten einsetzbar ist.

Zwei Ausführungsbeispiele der Erfindung sind in der Zeichnung dargestellt und werden im Folgenden näher erläutert. Dabei zeigen:
- FIG 1: eine erste erfindungsgemäße Ausbildung des Messsys- tems und
- FIG 2: eine zweite erfindungsgemäße Ausbildung des Messsys- tems.

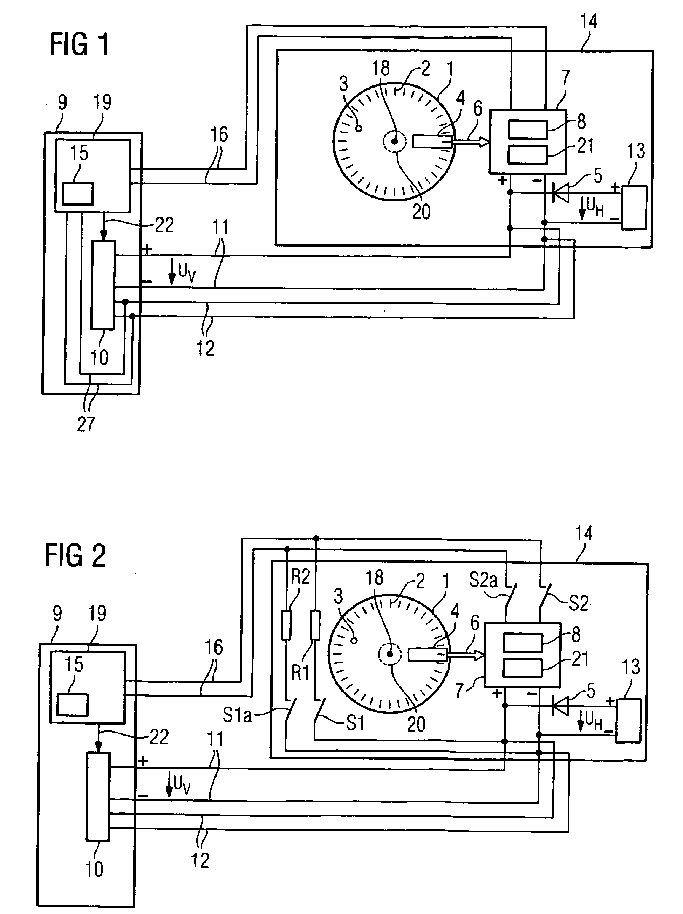

In FIG 1 ist in Form einer schematisierten Darstellung das erfindungsgemäße Messsystem dargestellt, wobei der Übersichtlichkeit halber nur die zum Verständnis der Erfindung notwendigen Elemente dargestellt sind. Ein Geber 14 weist dabei eine Scheibe 1 auf, deren Drehachse 18 mit einem bewegbaren Element, dass im Rahmen des Ausführungsbeispiels in Form einer Motorwelle 20 vorliegt, verbunden ist. Der Geber 14 misst solchermaßen die Lage, d.h. im Rahmen des Ausführungsbeispiels den Drehwinkel der Motorwelle 20. Der Geber 14 weist hierzu eine Inkrementalspur auf, die sich aus kreisförmig angeordneten Inkrementen zusammensetzt. In FIG 1 ist beispielhaft ein Inkrement mit dem Bezugszeichen 2 versehen. Die Scheibe 1 ist weiterhin mit einer Referenzmarke 3 versehen. Mittels einer Sensorik 4 wird bei einer Drehbewegung der Scheibe 1 ein Durchlaufen der Referenzmarke 3 sowie das Durchlaufen der Inkremente registriert und an eine Auswerteeinheit 7 übertragen, was durch einen Pfeil 6 angedeutet ist. Die durchlaufenden Inkremente werden von einem Zähler 21 gezählt und der Zählerstand in einem Speicher 8 abgelegt. Anhand des Zählerstandes kann dann die Lage der Motorwelle 20 bestimmt werden und z.B. über eine Ausgangssignalleitung 16 an eine Steuer- und/oder Regeleinrichtung 9, die zur Steuer- und /oder Regelung der Lage des bewegbaren Elements dient, mittels der Leitungen 16 übermittelt werden.

Zur Energieversorgung im Normalbetrieb des Gebers weist das Messsystem eine Spannungserzeugungseinrichtung 10 auf, die zur Energieversorgung des Gebers 14 eine externe Versorgungsspannung U_{V} erzeugt und über Spannungsversorgungsleitungen 11 den Geber 14 von extern mit Energie versorgt. Die Spannungsversorgungseinrichtung 10 ist im Rahmen des Ausführungsbeispiels Bestandteil der Steuer- und/oder Regeleinrichtung 9. Dies muss jedoch nicht notwendigerweise so sein, sondern die Spannungserzeugungseinrichtung 10 kann auch unabhängig von der Steuer- und/oder Regeleinrichtung 9 außerhalb der Steuer- und/oder Regeleinrichtung 9 angeordnet sein. Über Spannungsmessleitungen 12 wird in der Regel die direkt am Geber anliegende elektrische Versorgungsspannung gemessen. Entsprechend der gemessenen elektrischen Versorgungsspannung am Geber wird die von der Spannungsversorgungseinrichtung 10 erzeugte externe Versorgungsspannung U_{V} geregelt um eine für den Betrieb des Gebers 14 ausreichende Versorgungsspannung sicherzustellen.

Die Spannungsmessleitungen 12 sind insbesondere bei langen Versorgungsleitungen 11 oftmals notwendig. Die Spannungsmessleitung 12 müssen aber nicht unbedingt vorhanden sein.

Weiterhin weist der Geber 14 einen Energiespeicher 13 auf, der z.B. in Form einer Batterie oder eines Kondensators oder eine Kombination von beiden, ausgebildet sein. Der Energiespeicher 13 erzeugt die Hilfsversorgungsspannung U_{H}. Bei Ausfall der Versorgungsspannung U_{V} wird durch den Energiespeicher 13 über einen gewissen Zeitraum zumindest einen Teil des Gebers derart mit elektrischer Energie versorgt, dass der gespeicherte Zählerstand des Gebers im Speicher 8, erhalten bleibt. Der Energiespeicher 13 ist dabei über eine Entkopplungsdiode 5 von der Spannungserzeugungseinrichtung 10 entkoppelt. Bei Ausfall der externen Versorgungsspannung U_{V} liegt unter Vernachlässigung des Spannungsabfalls an der Entkopplungsdiode 5 die Hilfsversorgungsspannung U_{H} an den Versorgungsleitungen 11, den Spannungsmessleitungen 12 und der Auswerteeinheit 7 an. Die Hilfsversorgungsspannung stellt sicher, dass zumindest der im Speicher 8 gespeicherte Zählerstand des Zählers 21 erhalten bleibt. Andere Elemente des Gebers brauchen nicht unbedingt weiter mit Energie versorgt werden.

Das bisher beschriebene Messsystem ist, wie auch schon im Eingang erläutert, Stand der Technik.

Wenn die Spannungserzeugungseinrichtung 10 für längere Zeit ausfällt oder abgeschaltet ist und der Energiespeicher 13 sich infolge zunehmend entleert sinkt die Hilfsversorgungsspannung U_{H} mit der Zeit ab. Wenn die Hilfsversorgungsspannung unter einen kritischen Wert abgesunken ist, geht der Zählerstand im Speicher 8 verloren, d.h. er wird gelöscht oder verändert. Dies hat eine fehlerhaft ermittelte Lage zur Folge, was von der Steuer- und/oder Regeleinrichtung 9 bei handelsüblichen Messsystemen nicht bemerkt wird. Dies kann zu einer fehlerhaften Steuerung und/oder Regelung der Bewegung des bewegbaren Elements führen.

Erfindungsgemäß weist deshalb das erfindungsgemäße Messsystem eine Überwachungseinheit 15 auf, die die Hilfsversorgungsspannung U_{H} überwacht. Wenn die Hilfsversorgungsspannung unter einem Grenzwert liegt, wird von der Überwachungseinheit 15 eine fehlerhaft ermittelte Lage erkannt und gegebenenfalls ein entsprechendes Warnsignal ausgegeben. Die Überwachungseinrichtung 15 überwacht hierzu auf Unterschreitung der gemessenen Spannung unter einen in der Überwachungseinrichtung voreingestellten Schwellwert, wobei der Schwellwert sich aus dem Grenzwert abzüglich des Spannungsabfalls an der Entkopplungsdiode 5 ergibt, falls der Spannungsabfall an der Entkopplungsdiode 5 berücksichtigt werden soll. Andernfalls stimmt der Schwellwert vorzugsweise mit dem Grenzwert überein. Die Überwachungseinheit 15 kann hierbei in Form einer von der Steuer- und/oder Regeleinrichtung 9 autarken Hardwareeinrichtung vorliegen.

Bei handelsüblichen Messsystemen ist es üblich, wie in FIG 1 gezeigt, die Spannungserzeugungseinrichtung 10 als Bestandteil der Steuer- und/oder Regeleinrichtung 9 auszubilden, wobei die Steuer- und/oder Regeleinrichtung 9 eine Recheneinrichtung 19 aufweist, auf der die Steuer- und/oder Regelfunktionalitäten in Form von Software realisiert sind. Dies ist entsprechend in FIG 1 dargestellt. Um Hardware zu einzusparen, wird vorzugsweise die Überwachungseinheit 15 in Form von Software, die auf der Recheneinrichtung 19 abläuft, realisiert. Die Recheneinrichtung 19 ist dabei über nicht näher dargestellte Schnittstellen und den Leitungen 27 mit dem Spannungsmessleitungen 12 verbunden. Die Recheneinrichtung 19 kann solchermaßen die Höhe der Hilfsversorgungsspannung U_{H} einlesen. Wird bei einer solchen Anordnung der Steuer- und/oder Regeleinrichtung 9 die Steuer- und/oder Regeleinrichtung abgeschaltet, so fällt sowohl die Überwachungseinheit 15 als auch die externe Versorgungsspannung U_{V} aus. Falls nun insbesondere nach einem längeren Zeitraum die Steuer- und/oder Regeleinrichtung 9 wieder eingeschaltet wird, ist nicht sichergestellt, dass der Energiespeicher 13 über den gesamten Ausfallzeitraum eine ausreichend hohe Versorgungsspannung erzeugt hat, so dass der Zählerstand erhalten geblieben ist. Deshalb wird erfindungsgemäß nach einem Ausfall der externen elektrischen Versorgungsspannung U_{V}, unmittelbar vor Wiederherstellung der externen elektrischen Versorgungsspannung U_{V} die Hilfsversorgungsspannung U_{H} von der Überwachungseinheit 15 überwacht und falls die Hilfsversorgungsspannung unter einem Grenzwert liegt, auf eine fehlerhafte ermittelte Lage erkannt. Erst wenn diese Überprüfung durch die Überwachungseinheit 15 ergibt, dass die Hilfsversorgungsspannung nicht unter dem Grenzwert liegt, wird über ein Signal 22 die Spannungserzeugungseinrichtung 10 von der Recheneinrichtung 19 veranlasst, die externe Versorgungsspannung U_{V} zu erzeugen. Falls die Hilfsversorgungsspannung U_{H} aber unter den Grenzwert liegt, wird auf eine fehlerhaft ermittelte Lage erkannt und eine entsprechende Warnmeldung ausgegeben und gegebenenfalls ein Starten, z.B. eines Bearbeitungsvorgangs durch die Maschine verhindert. Der Grenzwert wird dabei so gewählt, dass sichergestellt ist, dass der Zählerstand erhalten bleibt.

In FIG 2 ist eine weitere Ausführungsform des erfindungsgemäßen Messsystems darstellt. Die in FIG 2 dargestellte Ausführungsform entspricht im Grundaufbau im Wesentlichen der vorstehend in FIG 1 beschriebenen Ausführungsform. Gleiche Elemente sind daher in FIG 2 mit den gleichen Bezugszeichen versehen wie in FIG 1. Der einzig wesentliche Unterschied besteht darin, dass bei der Ausführungsform gemäß FIG 2 die Hilfsversorgungsspannung U_{H} nicht über die Spannungsmessleitungen 12 an die Überwachungseinheit 15 übermittelt wird, sondern dass die Hilfsversorgungsspannung U_{H} auf eine Ausgangssignalleitung 16 des Gebers eingekoppelt wird und die Hilfsversorgungsspannung von der Überwachungseinheit 15 über die Ausgangssignalleitungen 16 gemessen. Hierzu wird im Rahmen des Ausführungsbeispiels unter Vernachlässigung des Spannungsabfalls an der Entkopplungsdiode 5, die Hilfsversorgungsspannung über die Widerstände R1 und R2 auf die beiden Ausgangssignalleitungen 16 eingekoppelt. Je nach Masseverhältnissen kann es dabei auch ausreichend sein, die Spannung nur über eine Ausgangssignalleitung und über einen Widerstand einzukoppeln. Da diese Maßnahme zwangsweise zu einer Beeinträchtigung des Ausgangssignals, welches z.B. in Form eines Inkrementalspursignals oder eines Lagesignals vorliegen kann führt, ist es besonders vorteilhaft, wenn nur bei Ausfall der externen elektrischen Versorgungsspannung U_{V} die Hilfsversorgungsspannung U_{H} auf die Ausgangssignalleitung 16 des Gebers eingekoppelt wird. Hierzu können z.B. vier Schalter S1 und S2 vorgesehen werden, wobei die Schalter derart z.B. von der Auswerteeinheit 7 angesteuert werden, dass bei anliegender externer Versorgungsspannung U_{V} die Schalter S1, S1a geöffnet und der Schalter S2, S2a geschlossen sind und bei Ausfall der elektrischen externen Versorgungsspannung U_{V} die Schalter S1, S1a geschlossen werden und der Schalter S2, S2a geöffnet werden. Je nach Masseverhältnissen kann es aber auch ausreichend sein nur die Schalter S1 und S2 vorzusehen und auf die Schalter S1a und S2a zu verzichten.

Es sei an dieser Stelle angemerkt, dass ein erstmaliges Detektieren der Referenzmarke, z.B. bei einer erstmaligen Inbetriebnahme des Messsystems nach Lieferung und Aufstellung der Maschine erfolgen kann.

Weiterhin sei an dieser Stelle angemerkt, dass in FIG 1 und FIG 2 nur die zum Verständnis wesentlichen Elemente des Gebers 14 dargestellt sind. Der Geber 14 kann z.B. auch über mehrere Inkrementalspuren verfügen und/oder über mehrere Sensoriken 4 zur Erfassung z.B. einer Feinlage (Sinus/Cosinus Spursignale), sowie über mehrere Zähler und mehrere Zählerstände zur Erfassung der laufenden Inkremente. Der Energiespeicher 13 versorgt dann entsprechend den Speicher 8 derart, dass die einzelnen Zählerstände bei Ausfall der externen Energieversorgungsspannung erhalten bleiben. Die Ausgangleitungen 16 können z.B. auch zur Ausgabe eines Sinus/Cosinus Spursignals des Gebers 14 dienen.

Weiterhin sei an dieser Stelle angemerkt, dass der Energiespeicher 13 auch außerhalb des Gebers 14 angeordnet sein kann.

## Patentansprüche

1. Messsystem, wobei das Messsystem einen Geber (14) zur Ermittelung der Lage eines bewegbaren Elements (20) aufweist, wobei das Messsystem einen Energiespeicher (13) aufweist, der bei Ausfall einer externen elektrischen Versorgungsspannung (U_{V}) des Gebers (14) zumindest ein Teil des Gebers (14) derart mit elektrischer Energie versorgt, dass ein gespeicherter Zählerstand des Gebers (14) bei Ausfall der externen elektrischen Versorgungsspannung (U_{V}) erhalten bleibt, wobei der Energiespeicher (13) eine Hilfsversorgungsspannung (U_{H}) erzeugt, wobei das Messsystem eine Überwachungseinheit (15) aufweist, **dadurch gekennzeichnet, dass** die Überwachungseinheit (15) Bestandteil einer Steuer- und/oder Regeleinrichtung (9) zur Steuerung und/oder Regelung des bewegbaren Elements (20) ist, wobei die Überwachungseinheit (15) nach einem Ausfall der externen elektrischen Versorgungsspannung (U_{V}) unmittelbar vor Wiederherstellung der externen elektrischen Versorgungsspannung (U_{V}) die Hilfsversorgungsspannung (U_{H}) überwacht und falls die Hilfsversorgungsspannung (U_{H}) unter einem Grenzwert liegt eine fehlerhaft ermittelte Lage erkennt.

2. Messsystem nach Anspruch 1 **dadurch gekennzeichnet, dass** die Messeinrichtung derart ausgebildet ist, dass die externe elektrische Versorgungsspannung (Uᵥ) und die Hilfsversorgungsspannung (U_{H}) über dieselben Spannungsmessleitungen (12) gemessen werden.

3. Messsystem nach Anspruch 1, **dadurch gekennzeichnet, dass** die Messeinrichtung derart ausgebildet ist, dass die Hilfsversorgungsspannung (U_{H}) auf eine Ausgangssignalleitung (16) des Gebers (14) eingekoppelt wird und die Hilfsversorgungsspannung (U_{H}) von der Überwachungseinheit (15) über die Ausgangssignalleitung (16) ermittelt wird.

4. Messsystem nach Anspruch 3, **dadurch gekennzeichnet, dass** die Hilfsversorgungsspannung (U_{H}) auf eine Ausgangssignalleitung (16) des Gebers (14) über einen Widerstand (R1,R2) eingekoppelt wird.

5. Messsystem nach Anspruch 3 oder 4, **dadurch gekennzeichnet, dass** nur bei Ausfall der externen elektrischen Versorgungsspannung (U_{H}) die Hilfsversorgungsspannung (U_{V}) auf eine Ausgangssignalleitung (16) des Gebers (14) eingekoppelt wird.

6. Messsystem nach einem der vorherigen Ansprüche, **dadurch gekennzeichnet, dass** der Energiespeicher (13) als Batterie oder als Kondensator oder als eine Kombination von Batterie und Kondensator ausgebildet ist.

7. Messsystem nach einem der vorherigen Ansprüche, **dadurch gekennzeichnet, dass** bei Ausfall der externen Versorgungsspannung (U_{V}) des Gebers (14) zumindest ein Teil des Gebers (14) von dem Energiespeicher (13) zusätzlich derart mit elektrischer Energie versorgt wird, dass überfahrene Inkremente gezählt werden.

8. Werkzeugmaschine, Produktionsmaschine und/oder Roboter mit einem Messsystem nach einem der Ansprüche 1 bis 7.

9. Verfahren zur Überwachung eines Messsystems, wobei das Messsystem einen Geber (14) zur Ermittelung der Lage eines bewegbaren Elements (20) aufweist, wobei das Messsystem einen Energiespeicher (13) aufweist, der bei Ausfall einer externen elektrischen Versorgungsspannung (U_{V}) des Gebers (14) zumindest ein Teil des Gebers (14) derart mit elektrischer Energie versorgt, dass ein gespeicherter Zählerstand des Gebers bei Ausfall der externen elektrischen Versorgungsspannung (U_{V}) erhalten bleibt, wobei vom Energiespeicher eine Hilfsversorgungsspannung (U_{H}) erzeugt wird, wobei das Messsystem eine Überwachungseinheit (15) aufweist, **dadurch gekennzeichnet, dass** die Überwachungseinheit (15) Bestandteil einer Steuer- und/oder Regeleinrichtung (9) zur Steuerung und/oder Regelung des bewegbaren Elements (20) ist, wobei von der Überwachungseinheit (15) nach einen Ausfall der externen elektrischen Versorgungsspannung (U_{V}) unmittelbar vor Wiederherstellung der externen elektrischen Versorgungsspannung (U_{V}) die Hilfsversorgungsspannung (U_{H}) überwacht wird und falls die Hilfsversorgungsspannung (U_{H}) unter einem Grenzwert liegt von der Überwachungseinheit (15) eine fehlerhaft ermittelte Lage erkannt wird.

## Claims

1. Measurement system, wherein the measurement system has a detector (14) for determining the position of the movable element (20), wherein the measurement system has an energy accumulator (13), which on failure of an external electrical supply voltage (U_{V}) of the detector (14), supplies at least a part of the detector (14) with electrical energy such that a stored counter state of the detector (14) is maintained on failure of the external electrical supply voltage (U_{V}), wherein the energy accumulator (13) generates an auxiliary supply voltage (U_{H}), wherein the measurement system has a surveillance unit (15), **characterised in that** the surveillance unit (15) is a component of an open-loop and/or closed-loop control device (9) for controlling and/or regulating the movable element (20), wherein the surveillance unit (15), after a failure of the external electrical supply voltage (U_{V}), immediately before the external electrical supply voltage (U_{V}) is restored, monitors the auxiliary supply voltage (U_{H}) and if the auxiliary supply voltage (U_{H}) lies below a threshold value detects an incorrectly determined position.

2. Measurement system according to claim 1, **characterised in that** the measurement device is embodied such that the external electrical supply voltage (U_{V}) and the auxiliary supply voltage (U_{H}) are measured by the same voltage measurement lines (12).

3. Measurement system according to claim 1, **characterised in that** the measurement device is embodied such that the auxiliary supply voltage (U_{H}) is coupled into an output signal line (16) of the detector (14) and the auxiliary supply voltage (U_{H}) is determined by the surveillance unit (15) via the output signal line (16).

4. Measurement system according to claim 3, **characterised in that** the auxiliary supply voltage (U_{H}) is coupled into an output signalling line (16) of the detector (14) via a resistor (R1, R2).

5. Measurement system according to claim 3 or 4, **characterised in that**, only on failure of the external electrical supply voltage (U_{H}) will the auxiliary supply voltage (U_{V}) be coupled into an output signalling line (16) of the detector (14).

6. Measurement system according to one of the preceding claims, **characterised in that** the energy accumulator (13) is embodied as a battery or as a capacitor or as a combination of battery and capacitor.

7. Measurement system according to one of the preceding claims, **characterised in that**, on failure of the external supply voltage (U_{V}) of the detector (14), at least a part of the detector (14) is additionally supplied by the energy accumulator (13) with electrical energy such that traversed increments are counted.

8. Machine tool, production machine and/or robot with a measurement system according to one of claims 1 to 7.

9. Method for surveillance of a measurement system, wherein the measurement system has a detector (14) for determining the position of the movable element (20), whereby the measurement system has an energy accumulator (13), which on failure of an external electrical supply voltage (U_{V}) of the detector (14) supplies at least a part of the detector (14) with electrical energy such that a stored counter state of the detector is maintained on failure of the external electrical supply voltage (U_{V}), wherein an auxiliary supply voltage (U_{H}) is generated by the energy accumulator, wherein the measurement system has a surveillance unit (15), **characterised in that** the surveillance unit (15) is a component of an open-loop and/or closed-loop control device (9) for controlling and/or regulating the movable element (20), wherein the surveillance unit (15), after a failure of the external electrical supply voltage (U_{V}), immediately before the external electrical supply voltage (U_{V}) is restored, monitors the auxiliary supply voltage (U_{H}) and if the auxiliary supply voltage (U_{H}) lies below a threshold value detects an incorrectly determined position.

## Revendications

1. Système de mesure, dans lequel le système de mesure comporte un capteur ( 14 ) de détermination de la position d'un élément ( 20 ) mobile, le système de mesure ayant un accumulateur ( 13 ) d'énergie, qui, si une tension ( U_{V} ) électrique extérieure d'alimentation du capteur ( 14 ) est coupée, alimente au moins une partie du capteur ( 14 ) en énergie électrique, de manière à ce qu'un état mémorisé de compteur du capteur ( 14 ) reste conservé si la tension électrique ( U_{V} ) électrique extérieure d'alimentation est coupée, l'accumulateur ( 13 ) d'énergie produisant une tension ( U_{H} ) auxiliaire d'alimentation, le système de mesure comportant une unité ( 15 ) de contrôle, **caractérisé en ce que** l'unité ( 15 ) de contrôle fait partie d'un dispositif ( 9 ) de commande et/ou de régulation pour la commande et/ou la régulation de l'élément ( 20 ) mobile, l'unité ( 15 ) de contrôle contrôlant, après une coupure de la tension ( U_{V} ) électrique extérieure d'alimentation directement avant le rétablissement de la tension ( U_{V} ) électrique extérieure d'alimentation, la tension ( U_{H} ) auxiliaire d'alimentation et, si la tension ( U_{H} ) auxiliaire d'alimentation se trouve en dessous d'une valeur limite, détectant une position déterminée défectueuse.

2. Système de mesure suivant la revendication 1, **caractérisé en ce que** le dispositif de mesure est tel que la tension ( U_{V} ) électrique extérieure d'alimentation et la tension ( U_{H} ) auxiliaire d'alimentation sont mesurées par les mêmes lignes ( 12 ) de mesure de la tension.

3. Système de mesure suivant la revendication 1, **caractérisé en ce que** le dispositif de mesure est tel que la tension ( U_{H} ) auxiliaire d'alimentation est injectée sur une ligne ( 16 ) de signal de sortie du capteur ( 14 ) et que la tension ( U_{H} ) auxiliaire d'alimentation est déterminée par l'unité ( 15 ) de commande par l'intermédiaire de la ligne ( 16 ) de signal de sortie.

4. Système de mesure suivant la revendication 3, **caractérisé en ce que** la tension ( U_{H} ) auxiliaire d'alimentation est injectée sur une ligne ( 16 ) de signal de sortie du capteur ( 14 ) par l'intermédiaire d'une résistance ( R1, R2 ).

5. Système de mesure suivant la revendication 3 ou 4, **caractérisé en ce que** la tension ( U_{H} ) auxiliaire d'alimentation n'est injectée sur une ligne ( 16 ) de signal de sortie du capteur ( 14 ) que lorsque la tension ( U_{V} ) électrique extérieure d'alimentation est coupée.

6. Système de mesure suivant l'une des revendications précédentes, **caractérisé en ce que** l'accumulateur ( 13 ) d'énergie est constitué sous la forme d'une batterie ou d'un condensateur ou d'une combinaison de batterie et de condensateur.

7. Système de mesure suivant l'une des revendications précédentes, **caractérisé en ce que**, lorsque la tension ( U_{V} ) extérieure d'alimentation du capteur ( 14 ) est coupée, au moins une partie du capteur ( 14 ) est alimentée par l'accumulateur ( 13 ) d'énergie supplémentairement en énergie électrique, de manière à ce que des incréments franchis soient comptés.

8. Machine outil, machine de production et/ou robot ayant un système de mesure suivant l'une des revendications 1 à 7.

9. Procédé de contrôle d'un système de mesure, le système de mesure ayant un capteur ( 14 ) de détermination de la position d'un élément ( 20 ) mobile, le système de mesure ayant un accumulateur ( 13 ) d'énergie qui, si une tension ( U_{V} ) électrique extérieure d'alimentation du capteur ( 14 ) est coupée, alimente au moins une partie du capteur ( 14 ) en énergie électrique, de manière à ce qu'un état mémorisé de compteur du capteur ( 14 ) reste conservé si la tension électrique ( U_{V} ) électrique extérieure d'alimentation est coupée, l'accumulateur ( 13 ) d'énergie produisant une tension ( U_{H} ) auxiliaire d'alimentation, le système de mesure comportant une unité ( 15 ) de contrôle, **caractérisé en ce que** l'unité ( 15 ) de contrôle fait partie d'un dispositif ( 9 ) de commande et/ou de régulation pour la commande et/ou la régulation de l'élément (20) mobile, la tension ( U_{H} ) auxiliaire d'alimentation étant contrôlée par l'unité ( 15 ) de contrôle, après que la tension ( U_{V} ) électrique extérieure d'alimentation est coupée, directement avant le rétablissement de la tension ( U_{V} ) électrique extérieure d'alimentation et, si la tension ( U_{H} ) auxiliaire d'alimentation est inférieure à une valeur limite, une position déterminée défectueuse étant détectée par l'unité ( 15 ) de contrôle.
